# EUROPEAN PATENT SPECIFICATION

(11) **EP 4 284 296 B1**
(45) Date of publication and mention of the grant of the patent: **23.04.2025**
(21) Application number: 22705132.3
(22) Date of filing: 26.01.2022
(51) Int. Cl.: A61C 8/00

(54) **DENTAL IMPLANT**
ZAHNIMPLANTAT
IMPLANT DENTAIRE

(30) Priority: 27.01.2021 IT 202100001556
(43) Date of publication of application: 06.12.2023
(73) Proprietor: Kalodon S.r.l., 60125 Ancona (IT)
(72) Inventor: BRUSCHI, Giovanni Battista, 00197 Roma (IT)
(74) Representative: Dall'Olio, Christian
(86) International application number: PCT/IB2022/050658
(87) International publication number: WO 2022/162537

(56) References cited:
- EP-A1- 3 453 358
- WO-A1-2015/010067
- WO-A1-2021/005481

## Description

### FIELD OF THE INVENTION

The present invention relates to the technical sector of dental implantology, i.e. the technique with which it is possible to restore, by artificial application of a fixed dentition to those who, for various motives or reasons, have suffered the loss of one or more of their natural teeth.

In particular, the present invention concerns a dental implant which is to be inserted in the bone, mandible or maxilla, following the realising of an adequate hole by surgery, to replace the natural root of a tooth that has been lost, on which plant a prosthetic product will then be inserted and tightened, which, by shape and dimensions, faithfully replaces the anatomy of the crown of the natural tooth that is no longer present.

### DESCRIPTION OF THE PRIOR ART

In this regard, dental implants are known which are realised in such a way as to be screwed, in a self-tapping and self-boring way, internally of a hole, substantially cylindrical, made surgically, using burrs or perforating drill bits, in the maxilla bone or the mandible bone in the position in which it is desired to replace a natural tooth that has been lost.

These implants are made in such a way as to comprise a shank shaped body having a first proximal end (or head end), and a second distal end (or apical end).

The implant is destined to be inserted in the hole realised in the bone with a second distal end, (or apical end) until it is positioned with a first proximal end (or head end) at the position of the emergence of the crestal platform.

The implant comprises, starting from the first proximal end (or head end), a threaded hole which extends internally of the body to a certain depth, into which a prosthetic component can be screwed, known as an abutment or a post, on which a crown can be cemented or screwed (for example made of a ceramic material) having a shape and dimension such as to reproduce the anatomy of the tooth that is to be restored.

The first proximal end (head end) has a substantially cylindrical shape while the remaining part of the body, up to the second distal end (apical) can have a truncoconical shape or, alternatively, a cylindrical shape.

For the insertion in the hole, and for the sealed mechanical coupling with the bone that delimits the hole, the implant comprises a helical threading which winds with a progressive series of turns about the body, starting from the second distal end (apical) substantially up to the start of the first proximal part (head).

In this way, the plant can be screwed into and stabilised, like a sort of screw, in the hole realised in the bone.

The profile of the turns is conformed in such a way as to constitute a cutting profile such as to be able to penetrate and gain purchase in the bone during the screwing-in.

This type of dental implant, which is designed to be screwed into the hole and which carries out a self-tapping and self-boring function, and which therefore removes bone material burrs during the perforating action of the cutting turns, also comprises, along the portion of the threading, a series of recesses which are realised at the positon of a series of turns of the threading.

The series of recesses present in the series of turns of the threading identify a sort of groove along the threading.

This groove, i.e. the various recesses along a series of turns, is realised by milling and in the sector jargon is called "apical milling", as it is substantially done starting from the turns of the threading at the second distal end (apical) and extends along a portion of the body towards the first proximal end (head).

In other words, at each turn of the series of turns, in substance, a "slice" of material is removed by means of the milling action.

The function of the groove along the threading consists in creating a sort of accumulation channel in which, during the screwing-in of the plant into the hole, to collect the residues/fragments of bone generated by the penetration of the cutting turns into the bone walls of the hole.

In some implants of the prior art, the recesses realised in the various turns substantially have, considering a transversal section to the axis of the implant at the turn, a pair of lateral walls and a bottom constituted by a flat surface; in substance the recesses have a U-shape.

In this case, the groove along the threading will form a sort of accumulation channel of the bone residues and fragments, with a U-shape, in transversal section.

In other implants of the prior art, on the other hand, the recesses are realised in such a way that they have, again considering a transversal section to the axis of the implant at the turn, a pair of lateral walls converging towards one another, i.e. substantially the recesses have a V-shape.

In this case, the groove along the threading will form a sort of accumulation channel of the bone residues and fragments, with a V-shape, in transversal section.

Thus, in substance, during the screwing-in of the dental implants into the hole, the residues/fragments of bone occupy the volume of space of the groove created by the series of recesses present in the series of turns.

A very important aspect of implantology in relation to dental implants is constituted by the waiting time necessary to reach the completion of the process known as osseointegration of the implant (or also prosthetisation), i.e. the biological process by which the implant is completely integrated with the bone after its insertion following the regeneration of the alveolar bone.

It is clear that the shorter the time necessary to obtain a complete osseointegration, first the patient will heal and then it is possible to proceed with the application of the prosthetic elements such as the post and the crown.

Scientific research has demonstrated that bone growth, i.e. the regeneration of the alveolar bone following the insertion of a dental implant, occurs more rapidly and effectively at those areas of the implant which are not in direct contact with the bone for the necessary primary stability.

In other words, the parts of the implant which are coupled with the bone to guarantee mechanical stability are for example the turns and the parts of the body between the turns, while the parts of the implant that do not contribute to the primary stability of the implant, i.e. to the mechanical coupling with the bone, are constituted by the recesses and then by the groove along the threading.

In the dental implants of the prior art described in the foregoing, during the screwing-in, the grooves are substantially completely wetted and filled both by the clotting, being the primary response to surgery loaded on the bone, and by the bone residues/fragments which accumulate on the walls and on the bottom of the recesses of the empty spaces, i.e. in the volume defined between the walls and the bottom of the recesses.

It is therefore on the quantity of clotting (distance osseogenesis, Davies 1998) that accumulates in the groove, that the velocity of bone regeneration depends, normally during the step of completion at two weeks in experimentation on dogs. (Berglundh 2003).

### SUMMARY OF THE INVENTION

The aim of the present invention is to describe a novel dental implant able to facilitate and amplify, in a central zone and far from the classic bone implant interface where the indispensable primary stability develops, a faster and more rapid osseointegration, i.e. facilitating a more rapid and effective bone regeneration in the core of the implant in a position near the threaded cavity for the locking of the prosthetic post.

The peripheral part, which interfaces the bone, will guarantee the primary stability with its turns and in that zone the normal phenomena of distance osseogenesis develop in the cavities not in contact with the surgically-prepared bone bed. As a response to the surgical preparation, the bone will first give the necessary primary stability but will face, as a response to the surgically-induced trauma induced, a cascade of remodelling and modelling phenomena which will lead, necessarily over a longer time, to the formation of bone repair which will complete the osseointegration phenomenon in the bone-implant interface.

A further object of the present invention relates to the design of the cavities which are directed towards the centre of the implant, and appear profiled alike to the DNA double helix and which are therefore designed in such a way that the symmetrical walls, at 180° are mechanically opposed to the action of unscrewing the mechanical components and the two opposite walls, at 180° as mentioned, oppose, on the contrary, the action of screwing-in.

Providing, therefore, a new dental implant having an increased resistance to torsional stresses during the step in which the osseointegration is fundamentally linked to the level of maturity of the bone repair (woven bone), i.e. a greater resistance to unscrewing or screwing-in, especially in the period of time occurring between repair osseointegration, where there is a poor quantity of mineral, and the following functional osseointegration, in which the mineral component is very abundant.

The above aims are attained with a dental implant according to the claims.

### BRIEF DESCRIPTION OF THE DRAWINGS

The features of preferred, but not exclusive, embodiments of the dental implant of the present invention will be described in the following with reference to the appended tables of drawings, in which:
- figure 1 schematically illustrates, in a view in slight perspective, the dental implant of the present invention;
- figure 2 is a frontal view of the dental implant of the invention, in a first angle view;
- figure 3 is a frontal view of the implant of the invention, rotated by 180° according to the axis of the implant, with respect to the view of figure 2;
- figure 4 is a frontal view of the implant of the invention rotated by 90° according to the axis of the implant, with respect to the view of figure 3;
- figure 5 is the view along section plane I-I of figure 2, in larger scale;
- figure 6 is a view along a longitudinal section plane of the implant di figure 2 and perpendicular to the section plane I-I of figure 2;
- figure 7 illustrates a view of detail K of figure 6 in larger scale and rotated;
- figure 8 is a plan view in slight perspective from below of the dental implant of the invention;

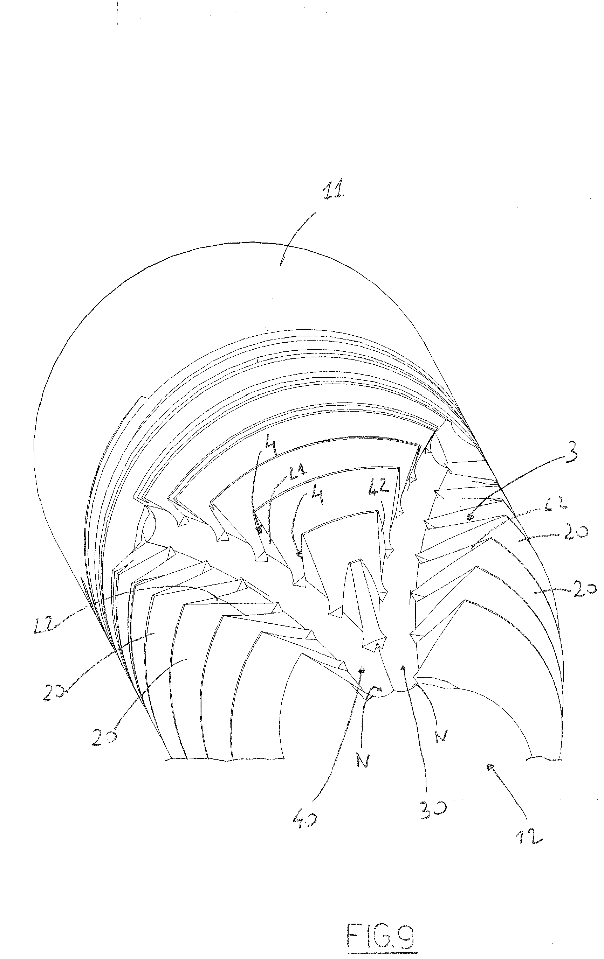

- figure 9 illustrates the implant of the invention in a partial view in perspective;
- figures 10A, 10B and 10C are respective views in transversal section, of a significant detail of the implant of the invention in possible different embodiments.

### DESCRIPTION OF THE PREFERRED EMBODIMENTS

With reference to the accompanying tables of drawings, reference numeral (100) denotes the dental implant of the present invention.

The dental implant (100) comprises a shank-shaped body (1) having for example a truncoconical shape or a conical shape and having a first proximal end (11), or head, and a second distal end, or apical, end (12).

The dental implant (100) is destined to be inserted with the second distal end (12), or apical end, in a hole made surgically in the maxilla or mandible bone of a patient, in the position in which it is desired to replace a natural tooth that has been lost, and positioned, following special manoeuvres, in the hole up to when the first proximal end (11), or head, is situated substantially at the position of the gum tissue.

The dental implant (100) is made in such a way as to comprise a seat (10), at the first proximal end (11), which is conformed for inserting and coupling to a post for supporting a prosthetic element.

In order to be insertable in the hole, and coupled mechanically with the bone surrounding the walls of the hole, the dental implant (100) is provided with a helical threading (2) having a cutting profile which winds, starting substantially from the second distal end (12), with a series of turns (20) spiralling about and along the body (1) up to in proximity of the first proximal end (11).

The cutting parts of the turns of the threading penetrate into the bone following the rotation of the dental implant carried out using special instruments, creating relative helical furrows for coupling in the bone.

The dental implant (100) is further made in such a way as to comprise a series of recesses (3, 4, 5, 6) which are each made, respectively at a portion of a respective turn (2) of a series of turns (20) of the threading (2), substantially forming at least a groove (30, 40, 50, 60) along the threading (2).

The various recesses (3, 4, 5, 6), i.e. the at least a groove (30, 40, 50, 60) along the threading (2), form a sort of filling volume (V) which is not in direct contact with the bone that delimits the hole, and in which there can be an accumulation of clotting and residues of bone fragments which are generate by the penetration of the turns in the bone during the screwing-in of the dental implant into the hole.

The special characteristics of the dental implant (100) of the present invention consist in the fact that the recesses (3, 4, 5, 6) of the series of recesses (3, 4, 5, 6) are realised in such a way that each recess (3, 4, 5, 6) comprises lateral walls (L1, L2) converging towards a bottom (F) which is conformed in such a way as to define a profiled cavity (N) constituting a primary filling volume (V1) additional to a filling volume (V) comprised between the lateral walls (L1, L2) of the recesses (3, 4, 5, 6).

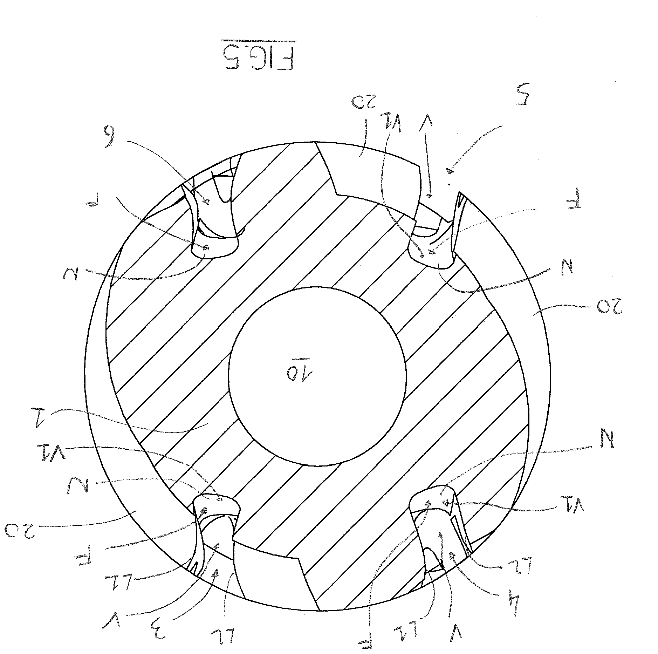

In this way, owing to the special conformation of the bottom of the recesses, which is conformed in such a way as to create a cavity, i.e. a sort of vase or reservoir, it is possible to create an additional primary filling volume (see for example figure 5 or figures from 10A to 10C), which is not in direct contact with the bone that delimits the hole and which can therefore accommodate a greater quantity of either the clotting and of the bone residues and fragments generate during the screwing-in, and penetration, of the turns of the threading in the bone.

This enables creating an environment that is favourable to a more rapid bone regeneration as the bottoms having the shape of cavities of the recesses, creating an additional primary filling volume, enable a greater mobility of the osteons and therefore a more rapid and effective bone regeneration, facilitating a more rapid osseointegration of the implant, with respect to the dental implants of the prior art described in the foregoing.

The recesses are preferably realised in such a way that the relative bottom has a width comprise between 0.2 and 0.8 mm.

It has been found that these dimensions are optimal in relations to the dimensions of an osteon.

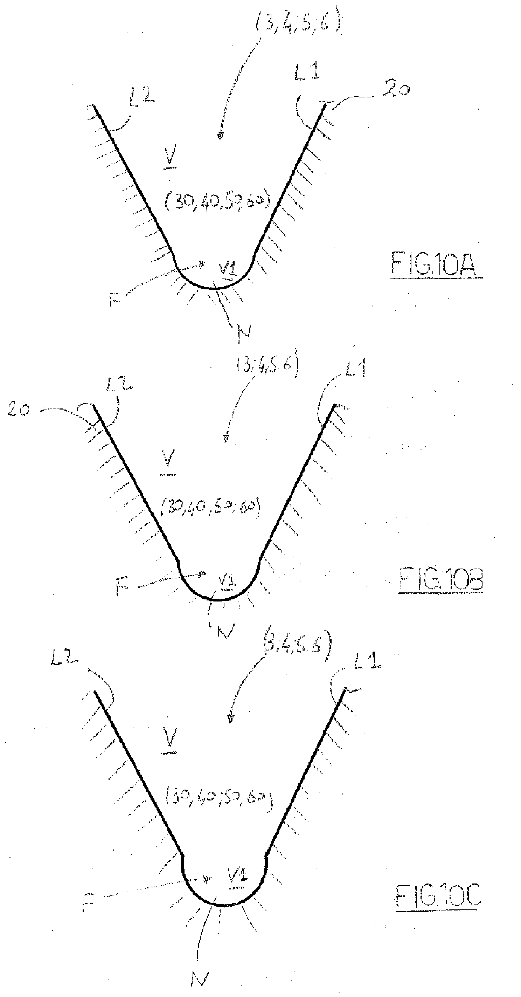

In figures 10A, 10B, and 10C, which illustrate views according to a section made in the plane of a turn, possible embodiments of the recesses are illustrated, in particular of the relative bottom in the form of cavities.

For example, the recesses can be realised in such a way as to have the lateral walls (L1, L2) inclined by 30° and the bottom wall, in section, to have an arc of circumference shape, with an angle at the centre of 180° (figure 10A).

In another possible embodiment, the bottom wall, in section, can have a semi-circumferential shape (figure 10B), or an arc of circumference with an angle at the centre of 180° (figure 10C).

The recesses can be made for example using a cutting instrument, such as a burr, having a cutting operating surface inferiorly comprising a sort of appendage having a suitable shape and realising the cavity in the bottom of the recesses.

Other further advantageous characteristics of the dental implant of the invention are described in the following.

The recesses (3, 4, 5, 6) of the series of recesses (3, 4, 5, 6) are preferably realised so as to have a depth at least equal to a depth of a respective turn (20) of the series of turns (20) of the threading (2) and wherein the cavity (N) of the bottom (F) of the recesses at least partially penetrates into the body (1). The recesses (3, 4, 5, 6) of the series of recesses (3, 4, 5, 6) define at least a groove (30, 40, 50, 60) along the body (1), and crossing the threading (2), wherein the at least a groove (30, 40, 50, 60) has a concave bottom surface that penetrates into the body (1) defining a respective furrow in the body (1). The recesses (3, 4, 5, 6) of the series of recesses (3, 4, 5, 6) are realised in such a way as to comprise a first series of recesses (3) defining a first groove (30) along the threading (2) and a second series of recesses (4) defining a second groove (4) along the threading (2), wherein the first groove (30) and the second groove (40) extend, starting from the second distal end (12) towards the first proximal end (11), along the threading (2).

According to the present invention, the first groove (30) extends along the threading (2), and with respect to the vertical axis of the body (1), in a rightwards path while the second groove (40) extends along the threading (2), and with respect to the vertical axis of the body (1), in a leftwards path.

With the opposite directions, rightwards and leftwards, of the two grooves, in which as mentioned the bone residues and fragments generated during the screwing-in of the implant into the hole will accumulate, and in which there will be bone regeneration, the implant will be able to have a resistance to torsional stresses, for example screwing-in or unscrewing stresses necessary for the application of the post (or abutment).

As previously mentioned, the design of the cavities of the bottoms of the recesses, which are directed towards the centre of the implant, and therefore the grooves, appear profiled alike to the DNA double helix, and are therefore designed in such a way that the symmetrical walls, at 180°, are mechanically opposed to the action of unscrewing the mechanical components and the two opposite walls, at 180° as mentioned, oppose, on the contrary, the action of screwing-in.

The recesses (3, 4, 5, 6) of the series of recesses (3, 4, 5, 6) are preferably realised in such a way as to comprise also a third series of recesses (5) defining a third groove (50) along the threading (2) and a fourth series of recesses (6) defining a fourth groove (60) along the threading (2), wherein the third groove (50) and the fourth groove (60) extend, starting from the second distal end (12) towards the first proximal end (11), along the threading (2).

More in particular, the third groove (50) extends along the threading (2), and with respect to the vertical axis of the body (1), in a rightwards path while the fourth groove (60) extends along the threading (2), and with respect to the vertical axis of the body (1), in a leftwards path.

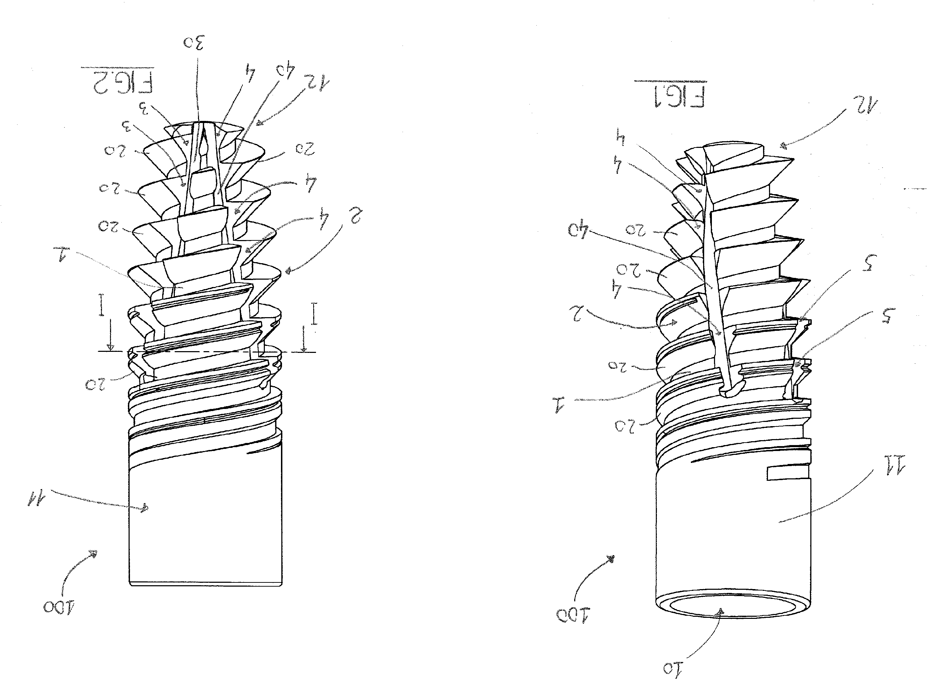

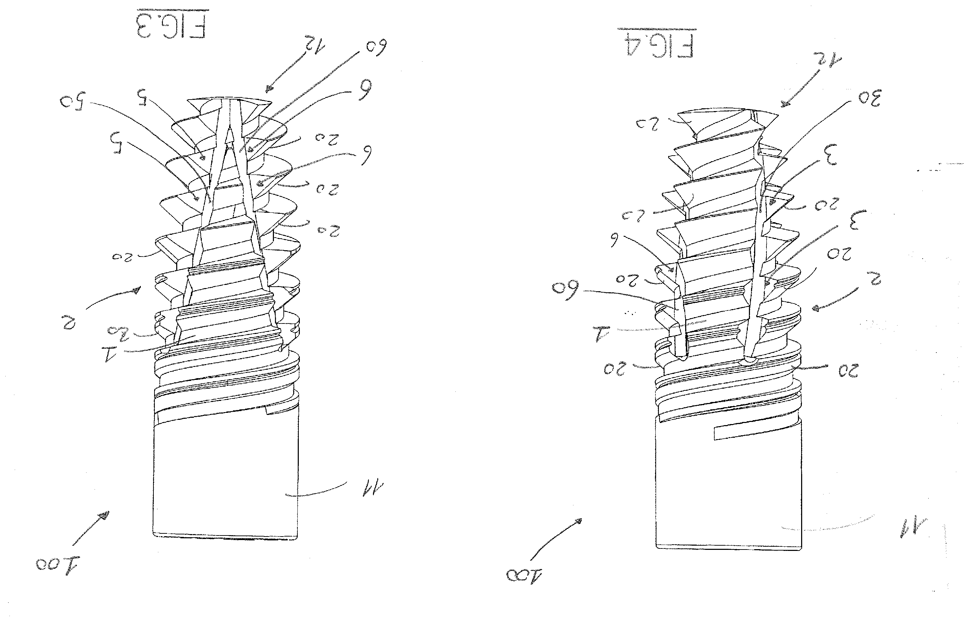

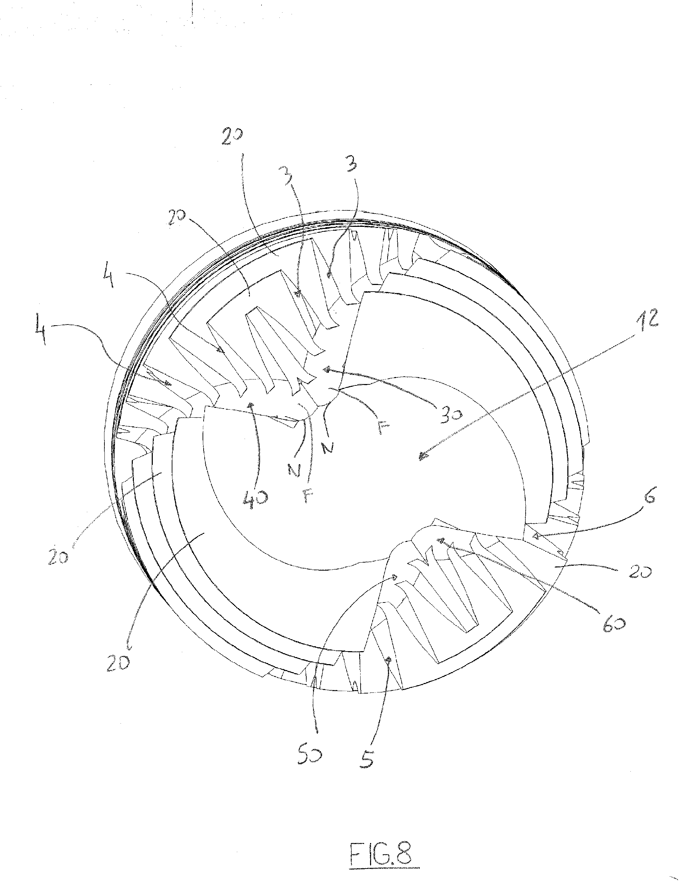

Still more preferably, in a case where the recesses (3, 4, 5, 6) are realised in such a way as to comprise four distinct series of recesses (3, 4, 5, 6) along the threading (2), and thus create four distinct grooves (30, 40, 50, 60) as described in the foregoing, the first groove (30) (rightwards) and the second groove (40) (leftwards) start from a first common point at the second distal end (12) forming a sort of V-shaped path along the body (1) towards the first proximal end (11), while the third groove (50) (rightwards) and the fourth groove (60) (leftwards) start from at the second common point, diametric to the first common point, at the second distal end (12) forming a sort of V-shaped path along the body (1) towards the first proximal end (11) (see for example figures 2, 3, 4, and figure 8).

In this way, the dental implant will have greater resistance to unscrewing and screwing-in, and further will be able to facilitate the site insertion in a case where it is necessary to use impact technology for positioning thereof into the hole.

Further, owing to the presence of the four grooves, with the orientation and arrangement described above, there will be a better continuity of progression in entry to the hole during the screwing-in of the implant in the case of an immediate post-extraction insertion.

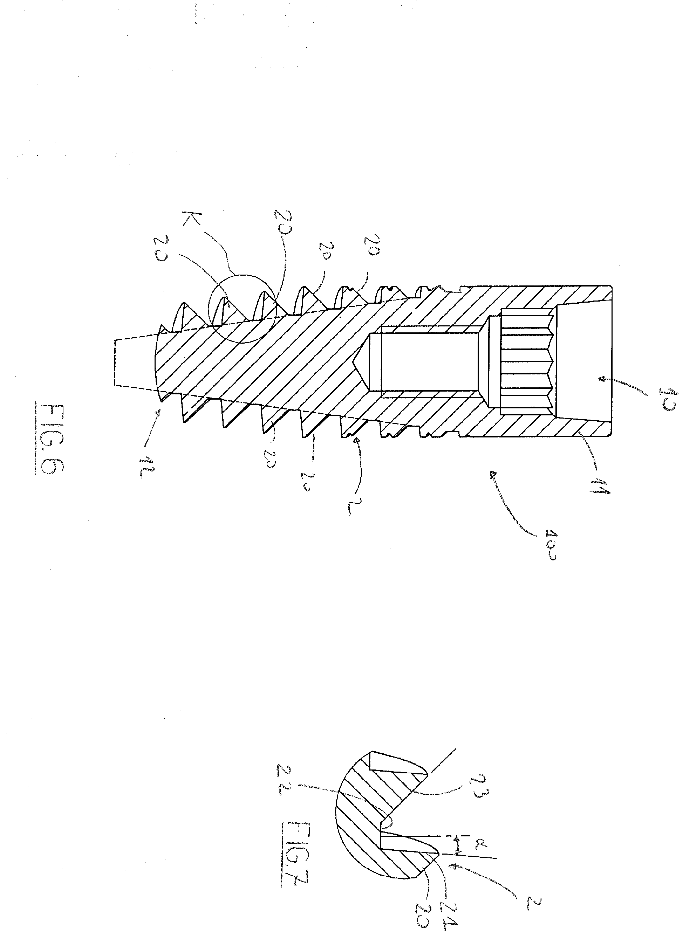

In a further preferred further aspect, the threading (2) is realised in such a way that at least a part of the turns (20), starting from the turns (20) at the second distal end (12), have an asymmetrical shape with a retracted flank (21) of the turn with respect to the second distal end (12) which forms an angle (α) comprised between 0° and 10° with a plane perpendicular to the bottom (22) of the threading (2) (see for example figure 7).

The retracted flank of the turn will thus constitute a sort of mechanical plane or abutment, functioning as an end run, once the implant has been inserted in the hole; in particular the retracted flanks of the turns in proximity of the second distal end (12) (or apical).

With this detail, i.e. the asymmetrical shape of the turns, it will further be possible to increase the area of opposition to sliding, on the surface under depression of the implant, of the still-immature bone during the initial steps of osseointegration, i.e. the osseointegration.

## Claims

1. A dental implant (100), comprising:
a body (1) having a shank shape having a first proximal end (11), or head end,
and a second distal end (12), or apical end;
a seat (10), at the first proximal end (11), conformed for inserting and coupling a post for supporting a prosthetic element;
a helical threading (2) having a cutting profile, starting substantially from the second distal end (12), with a series of turns (20) spiralling about and along the body (1) up to in proximity of the first proximal end (11);
a series of recesses (3, 4, 5, 6), each realised, respectively, at a portion of a respective turn (2) of a series of turns (20) of the helical threading (2),
wherein the recesses (3, 4, 5, 6) of the series of recesses (3, 4, 5, 6) are realised in such a way that each recess (3, 4, 5, 6) comprises lateral walls (L1, L2) converging towards a bottom (F) which is conformed in such a way as to define a profiled cavity (N) constituting a primary filling volume (V1) additional to a filling volume (V) comprised between the lateral walls (L1, L2) of the recesses (3, 4, 5, 6), and wherein the recesses (3, 4, 5, 6) of the series of recesses (3, 4, 5, 6) form at least a groove (30, 40, 50, 60) along the threading (2),
wherein the recesses (3, 4, 5, 6) of the series of recesses (3, 4, 5, 6) are realised in such a way as to comprise a first series of recesses (3) defining a first groove (30) along the threading (2) and a second series of recesses (4) defining a second groove (40) along the threading (2), wherein the first groove (30) and the second groove (40) extend, starting from the second distal end (12) towards the first proximal end (11), along the threading (2) with respect to the vertical axis of the body (1),
**characterized in that** the first groove (30) extends along the threading (2), and with respect to the vertical axis of the body (1), in a rightwards path while the second groove (40) extends along the threading (2), and with respect to the vertical axis of the body (1), in a leftwards path.

2. The dental implant (100) of claim 1, wherein the recesses (3, 4, 5, 6) of the series of recesses (3, 4, 5, 6) are realised so as to have a depth at least equal to a depth of a respective turn (20) of the series of turns (20) of the threading (2) and wherein the cavity (N) of the bottom (F) of the recesses at least partially penetrates into the body (1).

3. The dental implant (100) of claim 2, wherein the recesses (3, 4, 5, 6) of the series of recesses (3, 4, 5, 6) define at least a groove (30, 40, 50, 60) along the body (1), and crossing the threading (2), wherein the at least a groove (30, 40, 50, 60) has a concave bottom surface that penetrates into the body (1) defining a respective furrow in the body (1).

4. The dental implant (100) of claim 1, wherein the recesses (3, 4, 5, 6) of the series of recesses (3, 4, 5, 6) are realised in such a way as to comprise also a third series of recesses (5) defining a third groove (50) along the threading (2) and a fourth series of recesses (6) defining a fourth groove (60) along the threading (2), wherein the third groove (50) and the fourth groove (60) extend, starting from the second distal end (12) towards the first proximal end (11), along the threading (2) with respect to the vertical axis of the body (1).

5. The dental implant (100) of claim 4, wherein the third groove (50) extends along the threading (2), and with respect to the vertical axis of the body (1), in a rightwards path while the fourth groove (60) extends along the threading (2), and with respect to the vertical axis of the body (1), in a leftwards path.

6. The dental implant (100) of claim 5, wherein the first groove (30) and the second groove (40) start from a first common point at the second distal end (12) forming a sort of V-shaped path along the body (1) towards the first proximal end (11), and wherein the third groove (50) and the fourth groove (60) start from at the second common point, diametric to the first common point, at the second distal end (12) forming a sort of V-shaped path along the body (1) towards the first proximal end (11).

7. The dental implant (100) of any one of the preceding claims, wherein the threading (2) is realised in such a way that at least a part of the turns (20), starting from the turns (20) at the second distal end (12), have an asymmetrical shape with a retracted flank (21) of the turn with respect to the second distal end (12) which forms an angle (α) comprised between 0° and 10° with a plane perpendicular to the bottom (22) of the threading (2).

## Patentansprüche

1. Zahnimplantat (100), umfassend:
einen Körper (1) mit einer Schaftform, der ein erstes proximales Ende (11) oder Kopfende und ein zweites distales Ende (12) oder apikales Ende aufweist;
einen Sitz (10) am ersten proximalen Ende (11), der zum Einsetzen und Koppeln eines Pfostens zum Stützen eines prothetischen Elements angepasst ist;
ein schraubenförmiges Gewinde (2) mit einem Schneidprofil, das im Wesentlichen vom zweiten distalen Ende (12) ausgeht, mit einer Reihe von Windungen (20), die spiralförmig um und entlang des Körpers (1) bis in die Nähe des ersten proximalen Endes (11) verlaufen;
eine Reihe von Aussparungen (3, 4, 5, 6), die jeweils an einem Abschnitt einer jeweiligen Windung (2) einer Reihe von Windungen (20) des schraubenförmigen Gewindes (2) ausgebildet sind,
wobei die Aussparungen (3, 4, 5, 6) der Reihe von Aussparungen (3, 4, 5, 6) so ausgeführt sind, dass jede Aussparung (3, 4, 5, 6) Seitenwände (L1, L2) umfasst, die zu einem Boden (F) hin konvergieren, der so geformt ist, dass er einen profilierten Hohlraum (N) definiert, der ein primäres Füllvolumen (V 1) zusätzlich zu einem Füllvolumen (V) zwischen den Seitenwänden (L1, L2) der Aussparungen (3, 4, 5, 6) bildet, und wobei die Aussparungen (3, 4, 5, 6) der Reihe von Aussparungen (3, 4, 5, 6) mindestens eine Nut (30, 40, 50, 60) entlang des Gewindes (2) bilden,
wobei die Aussparungen (3, 4, 5, 6) der Reihe von Aussparungen (3, 4, 5, 6) so ausgeführt sind, dass sie eine erste Reihe von Aussparungen (3), die eine erste Nut (30) entlang des Gewindes (2) definieren, und eine zweite Reihe von Aussparungen (4), die eine zweite Nut (40) entlang des Gewindes (2) definieren, umfassen, wobei sich die erste Nut (30) und die zweite Nut (40) ausgehend vom zweiten distalen Ende (12) zum ersten proximalen Ende (11) entlang des Gewindes (2) in Bezug auf die vertikale Achse des Körpers (1) erstrecken,
**dadurch gekennzeichnet, dass** die erste Nut (30) sich entlang des Gewindes (2) und in Bezug auf die vertikale Achse des Körpers (1) in einem nach rechts verlaufenden Pfad erstreckt, während die zweite Nut (40) sich entlang des Gewindes (2) und in Bezug auf die vertikale Achse des Körpers (1) in einem nach links verlaufenden Pfad erstreckt.

2. Zahnimplantat (100) nach Anspruch 1, wobei die Aussparungen (3, 4, 5, 6) der Reihe von Aussparungen (3, 4, 5, 6) so ausgeführt sind, dass sie eine Tiefe aufweisen, die mindestens gleich einer Tiefe einer jeweiligen Windung (20) der Reihe von Windungen (20) des Gewindes (2) ist, und wobei der Hohlraum (N) des Bodens (F) der Aussparungen zumindest teilweise in den Körper (1) eindringt.

3. Zahnimplantat (100) nach Anspruch 2, wobei die Aussparungen (3, 4, 5, 6) der Reihe von Aussparungen (3, 4, 5, 6) zumindest eine Nut (30, 40, 50, 60) entlang des Körpers (1) definieren und das Gewinde (2) kreuzen, wobei die mindestens eine Nut (30, 40, 50, 60) eine konkave Bodenfläche aufweist, die in den Körper (1) eindringt und eine entsprechende Furche im Körper (1) definiert.

4. Zahnimplantat (100) nach Anspruch 1, wobei die Aussparungen (3, 4, 5, 6) der Reihe von Aussparungen (3, 4, 5, 6) so ausgeführt sind, dass sie auch eine dritte Reihe von Aussparungen (5), die eine dritte Nut (50) entlang des Gewindes (2) definieren, und eine vierte Reihe von Aussparungen (6), die eine vierte Nut (60) entlang Gewinde (2) definieren, wobei sich die dritte Nut (50) und die vierte Nut (60) ausgehend vom zweiten distalen Ende (12) zum ersten proximalen Ende (11) entlang des Gewindes (2) in Bezug auf die vertikale Achse des Körpers (1) erstrecken.

5. Zahnimplantat (100) nach Anspruch 4, wobei die dritte Nut (50) entlang des Gewindes (2) und in Bezug auf die vertikale Achse des Körpers (1) in einem nach rechts verlaufenden Pfad verläuft, während die vierte Nut (60) entlang des Gewindes (2) und in Bezug auf die vertikale Achse des Körpers (1) in einem nach links verlaufenden Pfad verläuft.

6. Zahnimplantat (100) nach Anspruch 5, wobei die erste Nut (30) und die zweite Nut (40) von einem ersten gemeinsamen Punkt am zweiten distalen Ende (12) ausgehen und eine Art V-förmigen Pfad entlang des Körpers (1) zum ersten proximalen Ende (11) bilden, und wobei die dritte Nut (50) und die vierte Nut (60) von einem zweiten gemeinsamen Punkt dem ersten gemeinsamen Punkt diametral gegenüberliegend, am zweiten distalen Ende (12) beginnen und eine Art V-förmigen Pfad entlang des Körpers (1) zum ersten proximalen Ende (11) bilden.

7. Zahnimplantat (100) nach einem der vorhergehenden Ansprüche, wobei das Gewinde (2) so ausgeführt ist, dass mindestens ein Teil der Windungen (20), von den Windungen (20) am zweiten distalen Ende (12) ausgehend, eine asymmetrische Form mit einer eingezogenen Flanke (21) der Windung in Bezug auf das zweite distale Ende (12) aufweisen, die einen Winkel (α) zwischen 0° und 10° mit einer Ebene senkrecht zum Boden (22) des Gewindes (2) bildet.

## Revendications

1. Implant dentaire (100) comprenant :
un corps (1) présentant une forme de tige avec une première extrémité proximale (11), ou tête, et une seconde extrémité distale (12), ou extrémité apicale;
un siège (10), à la première extrémité proximale (11), conformé pour l'insertion et l'accouplement d'un tenon destiné à supporter un élément prothétique;
un filetage hélicoïdal (2) à profil coupant, commençant sensiblement à la seconde extrémité distale (12), avec une série de tours (20) en spirale autour et le long du corps (1) jusqu'à proximité de la première extrémité proximale (11) ;
une série d'évidements (3, 4, 5, 6), chacun réalisé, respectivement, sur une partie d'un tour (2) respectif d'une série de tours (20) du filetage hélicoïdal (2),
dans lequel les évidements (3, 4, 5, 6) de la série d'évidements (3, 4, 5, 6) sont réalisés de telle sorte que chaque évidement (3, 4, 5, 6) comporte des parois latérales (L1, L2) convergeant vers un fond (F) conformé de manière à définir une cavité profilée (N) constituant un volume de remplissage primaire (V1) s'ajoutant à un volume de remplissage (V) compris entre les parois latérales (L1, L2) des évidements (3, 4, 5, 6), et dans lequel les évidements (3, 4, 5, 6) de la série d'évidements (3, 4, 5, 6) forment au moins une rainure (30, 40, 50, 60) le long du filetage (2),
dans lequel les évidements (3, 4, 5, 6) de la série d'évidements (3, 4, 5, 6) sont réalisés de manière à comprendre une première série d'évidements (3) définissant une première rainure (30) le long du filetage (2) et une deuxième série d'évidements (4) définissant une deuxième rainure (40) le long du filetage (2), dans laquelle la première rainure (30) et la seconde rainure (40) s'étendent, de la seconde extrémité distale (12) vers la première extrémité proximale (11), le long du filetage (2) par rapport à l'axe vertical du corps (1),
**caractérisé en ce que** la première rainure (30) s'étend le long du filetage (2), et par rapport à l'axe vertical du corps (1), dans une trajectoire vers la droite tandis que la deuxième rainure (40) s'étend le long du filetage (2), et par rapport à l'axe vertical du corps (1), dans une trajectoire vers la gauche.

2. L'implant dentaire (100) de la revendication 1, dans lequel les évidements (3, 4, 5, 6) de la série d'évidements (3, 4, 5, 6) sont réalisés de manière à avoir une profondeur au moins égale à la profondeur d'un tour respectif (20) de la série de tours (20) du filetage (2) et dans lequel la cavité (N) du fond (F) des évidements pénètre au moins partiellement dans le corps (1).

3. L'implant dentaire (100) de la revendication 2, dans lequel les évidements (3, 4, 5, 6) de la série d'évidements (3, 4, 5, 6) définissent au moins une rainure (30, 40, 50, 60) le long du corps (1), et traversant le filetage (2), dans lequel au moins une rainure (30, 40, 50, 60) a une surface inférieure concave qui pénètre dans le corps (1) définissant un sillon respectif dans le corps (1).

4. L'implant dentaire (100) de la revendication 1, dans lequel les évidements (3, 4, 5, 6) de la série d'évidements (3, 4, 5, 6) sont réalisés de manière à comprendre également une troisième série d'évidements (5) définissant une troisième rainure (50) le long du filetage (2) et une quatrième série d'évidements (6) définissant une quatrième rainure (60) le long du filetage (2), dans laquelle la troisième rainure (50) et la quatrième rainure (60) s'étendent, à partir de la deuxième extrémité distale (12) vers la première extrémité proximale (11), le long du filetage (2) par rapport à l'axe vertical du corps (1).

5. L'implant dentaire (100) de la revendication 4, dans lequel la troisième rainure (50) s'étend le long du filetage (2), et par rapport à l'axe vertical du corps (1), dans une trajectoire vers la droite, tandis que la quatrième rainure (60) s'étend le long du filetage (2), et par rapport à l'axe vertical du corps (1), dans une trajectoire vers la gauche.

6. L'implant dentaire (100) de la revendication 5, dans lequel la première rainure (30) et la deuxième rainure (40) partent d'un premier point commun à la deuxième extrémité distale (12) formant une sorte de chemin en forme de V le long du corps (1) vers la première extrémité proximale (11), et dans lequel la troisième rainure (50) et la quatrième rainure (60) partent d'un deuxième point commun, diamétral au premier point commun, à la deuxième extrémité distale (12) formant une sorte de chemin en forme de V le long du corps (1) vers la première extrémité proximale (11).

7. L'implant dentaire (100) de l'une quelconque des revendications précédentes, dans lequel le filetage (2) est réalisé de telle sorte qu'au moins une partie des spires (20), à partir des spires (20) à la seconde extrémité distale (12), ont une forme asymétrique avec un flanc rétracté (21) de la spire par rapport à la seconde extrémité distale (12) qui forme un angle (α) compris entre 0° et 10° avec un plan perpendiculaire au fond (22) du filetage (2).
